# EUROPÄISCHE PATENTANMELDUNG

(11) **EP 2 672 115 A2**
(43) Veröffentlichungstag der Anmeldung: **11.12.2013**
(21) Anmeldenummer: 13002932.5
(22) Anmeldetag: 06.06.2013
(51) Int. Cl.: F03D 11/04

(54) **Turm für eine Windenergieanlage**

(30) Priorität: 06.06.2012 DE 102012011175
(71) Anmelder: Bauunternehmen Echterhoff GmbH & Co. KG, 49492 Westerkappeln (DE)
(72) Erfinder: Funke, Günther, 48165 Münster (DE); Reddemann, Tho, 48308 Senden (DE)
(74) Vertreter: Pott, Ulrich

(57) **Zusammenfassung**

Ein Turm für eine Windenergieanlage (2) ist mit einer bodenseitig abgestützten Betonsäule (4), einer vorzugsweise rohrförmigen Oberkonstruktion (5) und einem zwischen liegenden Adaptersegment (6) mit ringförmigem Stahlmantel (7) versehen. Dieser hybride Turmaufbau weist einen konzentrisch zu einer vertikalen Hochachse (H) verlaufenden Stahlmantel (7) auf, der einen am Außenumfang im Wesentlichen gleichebenig mit der unteren Betonsäule (4) verlaufenden Anschlussbereich (A) definiert. Dabei sind an einer Innenseite (8) des Stahlmantels (7) jeweilige Ankerelemente (9) vorgesehen. Diese sind erfindungsgemäß als jeweilige zumindest den Stahlmantel (7) erfassende Halteeinheiten (E, E', E") ausgebildet, mit denen im Verbindungsbereich von Betonsäule (4) und Oberkonstruktion (5) aufnehmbare Belastungen (B) als jeweils aufteilbare Längs-, Quer- und Scherkomponenten (L, Q, S) gezielt vom Adaptersegment (6, 6') in den Betonaufbau (K, K') ableitbar sind (Fig. 5).

## Beschreibung

Die Erfindung betrifft einen Turm für eine Windenergieanlage gemäß dem Oberbegriff des Anspruchs 1. Dieser Turm besteht aus einer bodenseitig abgestützten Betonsäule und einer vorzugsweise rohrförmigen Oberkonstruktion.

Bei einer Turmkonstruktion gemäß DE 33 02 075 C2 ist ein aus zumindest zwei Abschnitten bestehender Betonmast vorgesehen. Nach Art eines Adapters ist im Verbindungsbereich dieser Abschnitte ein diese erfassendes Stahlrohr vorgesehen. Die stirnseitigen Enden der beiden Abschnitte weisen dabei zusätzliche Bolzenverbinder auf. Damit ist ein Turm-System geschaffen, mit dem durch Wind erzeugte Belastungen, nämlich ein Biegemoment, sowie jeweilige Querkräfte und die Eigenlast der Turmkonstruktion, optimal aufgenommen werden können.

Bei einem turmartigen Hochbauwerk gemäß DE 199 36 603 A1 wird zwischen zwei Schalungswänden ein Betonaufnahmeraum definiert, der konzentrisch zur vertikalen Hochachse des Turmes aufgefüllt wird. Dabei können in die Betonmasse jeweilige Verankerungselemente eingegossen werden, so dass jeweilige Führungselemente nach dem Aushärten des Betons fest in die Bauwerkswand integriert sind.

In DE 199 01 510 A1 wird ein Fundament für einen oberirdischen Turm vorgeschlagen, wobei zur Fixierung jeweilige Zuganker in Form von Litzebündeln vorgesehen sind. Diese werden in Form von hochbelastbaren korrosionsbeständigen Stahlseilen ausgeführt und sind von einer elastischen Schutzhülle umgeben. Auch in DE 102 26 996 A1 ist das Fundament für den Turm einer Windenergieanlage vorgeschlagen, wobei zur Fixierung der Baugruppen eine mit äußeren Rohren versehene Abstützplatte in die Betonstruktur eingebracht wird. Eine weitere Ausführung eines Fundamentes ist in WO 2004/057113 A1 gezeigt, wobei ebenfalls ein bodenseitiges Plattensystem mit Ankerelementen im Boden verbunden wird.

In WO 2005/015013 A1 ist ein aus zumindest zwei Turmabschnitten bestehender Turm für eine Windkraftanlage gezeigt, wobei ausgehend von einem bodenseitigen Beton-Basissegment ein zweites oberes Turmsegment im Bereich einer Betonwand des unteren Segmentes eingebettet ist. Mit dieser Einbettung wird jedoch am oberen stirnseitigen Ende des Basis-Betonsegmentes ein umlaufender Rand gebildet, so dass hier die Belastungen des Systems zu erhöhten Kerbwirkungen und Materialausbrüchen führen können. Die Festlegung des zweiten Turmsegmentes in der Einlassungs-Zone des unteren Betonsegmentes ist dabei so ausgeführt, dass zusätzliche Verankerungselemente zur Stabilisierung am Ende des oberen Stahlringes angeordnet sind.

Auch in WO 2004/016882 A1 sind in einem Turm zusätzliche Verankerungselemente vorgesehen, und bei einem hybriden Turmbauwerk gemäß DE 20 2006 009 554 U1 ist das obere Turmsegment im Bereich eines Stahladapterelementes mit einer kammartigen Profilierung an der Innenseite versehen, so dass zur innen liegenden Betonschicht hin eine Verankerung gebildet wird. Derartige Ausführungen von Verankerungen sind auch in DE 198 32 921 A1 und DE 39 00 432 A1 gezeigt. Die Erfindung befasst sich mit dem Problem, einen Turm für eine Windenergieanlage zu schaffen, bei dem ausgehend von einer hybriden Bauwerksgestaltung die vom Beton umgebenen Ankerelemente eine funktionale Einheit mit verbesserten Stabilitätseigenschaften bilden und durch optimale Ableitung von Belastungen, insbesondere durch wechselnde Windrichtungen erzeugte Momente, eine Erhöhung der Langzeitstabilität des Turmes möglich ist.

Die Erfindung löst diese Aufgabe durch einen Turm für eine Windenergieanlage mit den kennzeichnenden Merkmalen des Anspruchs 1. Weitere vorteilhafte Ausgestaltungen des Systems ergeben sich aus den Ansprüchen 2 bis 25.

Der in hybrider Ausführung konzipierte Turm für eine Windenergieanlage weist im Bereich seines zwischen bodenseitiger Betonsäule und rohrförmiger Oberkonstruktion befindlichen Adaptersegmentes jeweilige Ankerelemente auf, die in erfindungsgemäßer Ausführung als jeweilige den ringförmigen Stahlmantel erfassende Halteeinheiten mit komplexer Kraft- und Momentenableitung ausgebildet sind.

Diese Halteeinheiten bilden eine funktionale Baugruppe, mit der jeweilige im Beton fixierbare und/oder mit der Bewehrung kombinierbare Strukturen ausführbar sind, derart, dass die in Einbaulage am Turm auftretenden Zug- und/oder Druckbelastungen in Form jeweiliger Längs-, Quer- und/oder Scherkomponenten vom Stahlmantel in den Innenaufbau des Turmes ableitbar sind, so dass auch bei hohen dynamischen Belastungen des Systems die Kriterien der Standfestigkeit und Langlebigkeit sicher erfüllt werden.

Die Konstruktion der als "komplexe Kraftaufnehmer" wirkenden und als Ansatzkontur in die Stahlbauteile integrierten Halteeinheiten geht davon aus, dass mit vergleichsweise geringem technischem Aufwand eine kompakte Stabilisierungsstruktur im Bereich des Adaptersegmentes zu installieren ist und damit die Langzeitstabilität des Turmes in diesem hoch belasteten und beschädigungsgefährdeten Bereich vorteilhaft erhöht werden kann.

Die jeweiligen - im Unterschied zu bekannten Zwei-Komponenten-Systemen (DE 20 2006 009 554 U1) - eine optimierte Drei-Komponenten-Aufnahme realisierenden Halteeinheiten bilden dabei an der Innenseite des im Wesentlichen konzentrisch zur Hochachse verlaufenden Stahlmantels wahlweise eine senkrechte, waagerechte und/oder schräg angeordnete Anlagestruktur, so dass in variabler Anpassung an unterschiedliche Turmhöhen, Turmdurchmesser o. dgl. Ausgangsparameter eine optimale Gestaltung des jeweiligen Verbindungsbereichs zum Adaptersegment hin gebildet werden kann.

In vorteilhafter Ausführung ist vorgesehen, dass die die Halteeinheiten aufweisende Struktur nach Art einer wendelförmig angeordneten Ansatzkontur an der Innenseite des Stahlmantels verläuft und mit der Betonmasse bzw. der Bewehrung zusammenwirkt. Durch eine optimale Verteilung und Aneinanderreihung mehrerer der Halteeinheiten kann eine längsgerichtete, quergerichtete, kreuzende oder wendelförmige Struktur gebildet sein. Diese wird an der Innenseite des Adaptersegmentes bzw. des rohrförmigen Stahlmantels zumindest teilweise vorgefertigt bereitgestellt. Ebenso ist vorgesehen, dass die Halteeinheiten an hoch belasteten Bereichen des Umfangs des Adaptersegmentes eine Verstärkung bewirken können.

Zur optimalen Aufnahme der drei - insbesondere bei Windbelastung o. dgl. erzeugten - Kraftkomponenten ist vorgesehen, dass die Halteeinheiten als im Bereich einer ihrer Umfangsflächen mit dem Stahlmantel verbundene Profilplatten ausgebildet sind. An diesen ist zumindest jeweils eine zusätzliche Halteöffnung vorgesehen. Dieses eine optimierbare Geometrie aufweisende Platten-Konzept sieht vor, dass - in Einbaulage des Systems aus Stahlmantel und angeschweißten Profilplatten - die jeweiligen quer zur Plattenebene verlaufenden Halteöffnungen eine Ausrichtung aufweisen, mit der insbesondere die am Stahlmantel auftretenden Querkräfte zusätzlich zu den Längskräften und Scherkräften "in einem Punkt" aufnehmbar sind. Es versteht sich, dass dazu zumindest der Beton in diese Öffnung eingeformt werden kann. Oder es besteht im Bereich der Halteöffnung eine Verbindung zur innen liegenden Bewehrung nach Art eines Widerlagers.

In vorteilhafter Ausführung ist vorgesehen, dass die Profilplatten in gleichmäßigem Abstand über den Innenumfang des Adaptersegmentes bzw. die Innenseite des Stahlmantels verteilt fixiert sind. Ebenso ist denkbar, dass von dieser regelmäßigen Anordnung abweichend, beispielsweise mit Blick auf eine bevorzugte Windrichtung am Turm, jeweilige Teilbereiche des Stahlmantels mit einer - durch geringere Abstände - dichteren Anordnung von Profilplatten versehen sind.

Dabei ist vorgesehen, dass die Profilplatten vorzugsweise eine im Wesentlichen parallel zur vertikalen Hochachse des Turmes ausgerichtete sowie einen radialen Abstand definierende Einbaulage an der Innenseite des ringförmigen Stahlmantels aufweisen. Vorgesehen ist auch eine horizontale Übereinanderlage der Profilplatten, wobei diese einen entsprechenden vertikalen Abstand aufweisen.

Ausgehend von bekannten Ausführungsformen der Bewehrungstechnik ist auch vorgesehen, dass die Profilplatten in Einbaulage jeweilige Bewehrungsteile und/oder den Beton im Bereich der Halteöffnung aufnehmen und so variabel ausführbare Verbindungsstrukturen definierbar sind. Durch eine Vielzahl auch unterschiedlich geformter Halteöffnungen ist die Aufnahme von Bewehrungsteilen unterschiedlicher Anzahl und Größenabmessungen möglich.

Die vorteilhafte Weiterentwicklung des Konzeptes der Halteleisten mit den "einteiligen" Profilplatten sieht vor, dass diese mit zumindest einem zusätzlichen Halteelement eine jeweilige "erweiterte" Halteeinheit bilden. Dabei kann dieses zusätzliche Halteelement in den Beton eingelegt werden, und/oder es ist an der Armierung im Bereich der Bewehrungsteile festlegbar.

Eine vorteilhafte Ausführung sämtlicher vorbeschriebener Halteeinheiten wird dadurch erreicht, dass bereits die Profilplatten mittels einer Schweißverbindung am Stahlmantel fixiert sind. Dieser Verbindungsaufbau ist vergleichsweise einfach herstellbar, und durch die vertikal oder horizontal ausgerichtete Anordnung der Profilplatten am Stahlmantel sind im Bereich von aneinanderstoßenden Teilbereichen entsprechende Kehlnähte belastungsstabil herstellbar.

Zur kostenoptimalen Realisierung dieses Systems der Halteeinheiten mit den erfindungsgemäßen Profilplatten ist vorgesehen, dass diese Profilplatten - einschließlich deren Halteöffnungen - mittels eines Schneidvorgangs aus einem band- oder plattenförmigen Halbzeug hergestellt werden. Die Kontur der Profilplatten ist dabei so ausgeführt, dass aus einem band- oder streifenförmigen Halbzeug jeweilige spiegelbildlich geformte Profilplatten entstehen und damit eine nahezu vollständige Materialausnutzung erreicht wird. Ebenso ist denkbar, dass die Profilplatten durch einen Stanzvorgang geformt werden oder durch ein optimales Laserschneiden die Profilierung der Profilplatten weitgehend ohne Abfall erfolgt.

Die geometrische Gestaltung der in variablen Längen bereitgestellten Profilplatten sieht vor, dass deren jeweilige Halteöffnungen in der Einbaulage der Teile jeweils nach Art eines Widerlagers in den Beton eingreifen können. Vorteilhaft werden jeweilige Armierungen der Bewehrung in diesem Bereich der Widerlager eingelegt, so dass mit einer Vielzahl von "Verbindungspunkten" eine optimale Aussteifung des von den Halteeinheiten erfassten Stahlmantels bewirkt ist. Damit wird insbesondere ein "Ausbauchen" oder "Ovalisieren" des Adaptersegmentes und ein ungewolltes Ablösen von Beton sicher verhindert.

Eine vorteilhafte Ausführung der Profilplatten sieht vor, dass diese im Bereich von zumindest einem an der Längsseite der Profilplatte geformten Profilzahn jeweilige Hinterschneidungen als Halteöffnungen aufweisen. Damit wird deutlich, dass mehrere der Hinterschneidungen eine wellenförmige Kontur an der Profilplatte bzw. den Profilzähnen bilden und so eine "Verzahnung" mit Drei-Komponenten-Ableitung definiert ist.

Wie bereits im Zusammenhang mit der optimalen Festlegung der Profilplatten am Stahlmantel mittels jeweiliger Schweißverbindungen dargestellt, ist vorgesehen, dass die mit dem Stahlmantel verschweißten Profilplatten mit ihrer die Halteöffnung aufweisenden Längsseite frei in einen den Beton aufnehmenden Montageraum vorstehen. Damit kann die Aufnahme von Stützkräften durch entsprechende Abmessungen der Profilplatten - sowohl in der Länge als auch in der Breite - optimiert werden.

Es versteht sich, dass der vorbeschriebene Montageraum für die Profilplatten auch im Verbindungsbereich von zwei im Bereich des Adapterteils übereinander gesteckten Stahlrohren des Turmes vorgesehen sein kann. Dieser "freie" Montageraum kann dann durch ein Vergießen mit Beton so gefüllt werden, dass die "gesteckten" Stahlrohre mittels dieses Montageraumes und der darin angeordneten Profilplatten in der Einbaulage langzeitstabil fixiert werden. Dabei kann dieser Verbindungsbereich vorteilhaft konisch geformt sein, so dass die Fixierung nach Art einer "Selbstzentrierung" erfolgt.

Eine weitere vorteilhafte Ausführung der Halteeinheit sieht vor, dass diese eine am Stahlmantel gehaltene Aufnahmeleiste nach Art eines "Zwischengliedes" aufweist. An dieser Aufnahmeleiste kann ein zumindest die Zugbelastungen ableitendes Fixierbauteil als Querkraft aufnehmende Baugruppe vorgesehen sein. Vorteilhaft ist dieses Fixierbauteil dabei formschlüssig mit der Aufnahmeleiste verbunden. Ebenso ist denkbar, dass das Fixierbauteil mittels einer Schweißverbindung an der Aufnahmeleiste gehalten ist.

Aufbauend auf bekannten Ankerelementen im Bereich der Turmbaukonstruktion ist vorgesehen, dass als Fixierbauteil im Bereich des Adaptersegmentes bzw. des ringförmigen Stahlmantels auch ein als Serienbauteil bekannter Kopfbolzen angebracht werden kann. An Stelle dessen bzw. zusätzlich kann als Fixierbauteil auch ein Hängebügel als Gegenhalter in das System integriert werden, so dass die damit gebildeten Halteeinheiten ebenfalls die Drei-Komponenten-Ableitung realisieren.

Ausgehend von diesem kombinatorischen Aufbau des Systems im Bereich der erfindungsgemäßen Halteeinheiten ist vorgesehen, dass die am Stahlmantel gehaltene Aufnahmeleiste auch zusätzlich nur mit der "hinterschnittenen" Profilplatte kombiniert werden kann. Diese Profilplatte erfasst im Bereich einer Schweißnaht die jeweilige mit dem Stahlmantel verschweißte Aufnahmeleiste, so dass eine optimale Kraftableitung in den Stahlmantel gewährleistet werden kann.

Weitere Einzelheiten und vorteilhafte Ausgestaltungen ergeben sich aus der nachfolgenden Beschreibung und der Zeichnung, die mehrere Ausführungsbeispiele des erfindungsgemäßen Turmaufbaus mit Halteeinheiten im Bereich des Adaptersegmentes zeigen. In der Zeichnung zeigen:
- Fig. 1: eine Vorderansicht auf einen Turm für eine Windenergieanlage mit hybridem Turmaufbau,
- Fig. 2: eine vergrößerte Ausschnittsdarstellung eines zwischen Betonsäule und Oberkonstruktion vorgesehenen Adaptersegmentes gemäß dem Stand der Technik,
- Fig. 3: eine Ausschnittsdarstellung ähnlich Fig. 2 mit einer erfindungsgemäßen Halteeinheit im Bereich des Adaptersegmentes sowie jeweilige Detailausführungen der Halteeinheit gemäß 3a, 3b und 3c,
- Fig. 4: eine Ausschnittsdarstellung ähnlich Fig. 3 mit einer zweiten Ausführung der Halteeinheit im Bereich der Bewehrung,
- Fig. 5: eine vergrößerte Perspektivdarstellung der Halteeinheit in Verbindungslage mit Bauteilen der Bewehrung,
- Fig. 6 bis Fig. 9: jeweilige vergrößerte Einzeldarstellungen von unterschiedlichen Ausführungen und Festlegungen der Halteeinheit,
- Fig. 10: eine vergrößerte Ausschnittsdarstellung im Bereich einer als Zwischenteil für die Halteeinheit vorgesehenen Halteleiste,
- Fig. 11: jeweilige unterschiedliche Ausführungsformen von Querschnittsgestaltungen der Aufnahmeleisten ähnlich Fig. 10,
- Fig. 12 bis Fig. 14: jeweilige Schnittbilder bei der Herstellung spiegelgleicher Konturen der Profilplatten,
- Fig. 15: eine Anwendung der erfindungsgemäßen Halteeinheit im Bereich eines Adaptersegmentes mit zwei aufeinander gesteckten Stahlrohren,
- Fig. 16: eine Querschnittsdarstellung im Bereich der Verbindung gemäß Fig. 15,
- Fig. 17: eine Perspektivdarstellung ähnlich Fig. 5 mit eine vertikale Profilplatte in veränderter Ausführung aufweisenden Halteeinheiten,
- Fig. 18: eine Darstellung ähnlich Fig. 17 mit jeweils eine Winkelstellung einnehmenden Profilplatten an Aufnahmeleisten der Halteeinheit,
- Fig. 19: eine Vorderansicht der Profilplatte gemäß Fig. 17,
- Fig. 20: eine Schnittdarstellung der Halteeinheit gemäß einer Linie I-I in Fig. 19, und
- Fig. 21: eine Schnittdarstellung ähnlich Fig. 20 mit der eine schräggestellte Einbaulage aufweisenden Profilplatte.

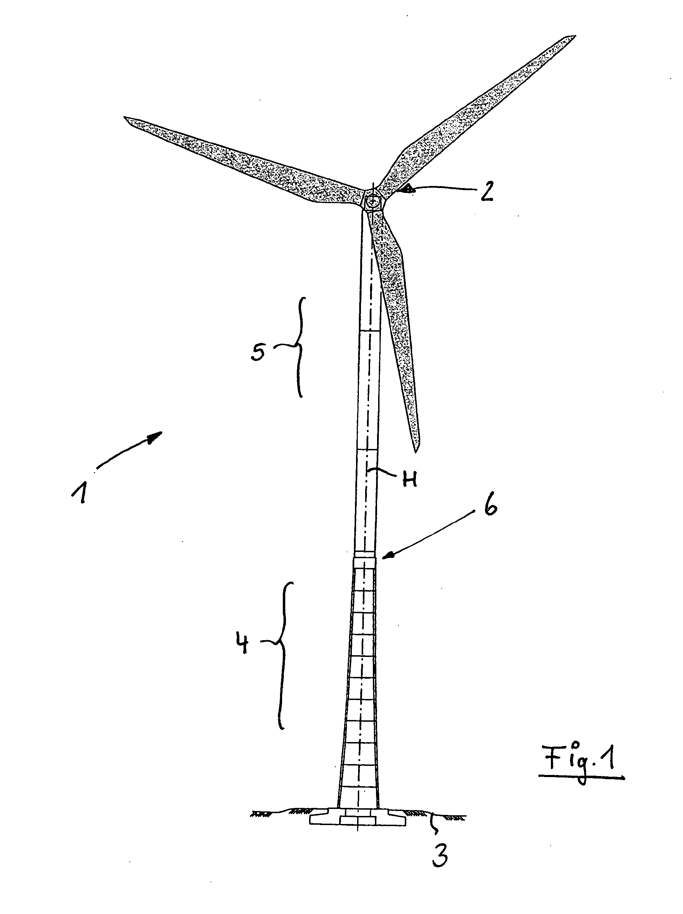

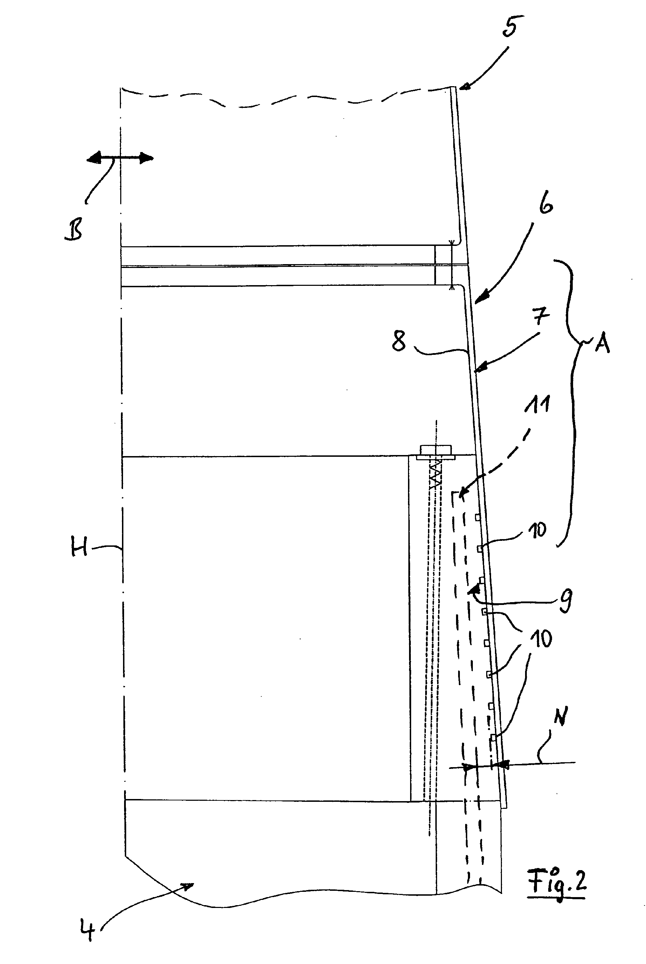

In Fig. 1 ist in einer Prinzipdarstellung ein Turm 1 für eine Windenergieanlage 2 dargestellt, wobei dieser Turm 1 im Wesentlichen zweiteilig ausgebildet ist und eine am Boden 3 abgestützte Betonsäule 4 und eine vorzugsweise rohrförmige Oberkonstruktion 5 aufweist. Die Betonsäule 4 und die Oberkonstruktion 5 sind durch ein zwischen liegendes Adaptersegment 6 mit ringförmigem Stahlmantel 7 (Fig. 2) so verbunden, dass ein hybrider Turmaufbau an sich bekannter Ausführung bereitgestellt wird. Derartige Türme 1 sind neben Windparks an Land auch prinzipiell für Offshore-Windanlagen geeignet.

Bei derartigen Turmaufbauten ist vorgesehen, dass der konzentrisch zu einer vertikalen Hochachse H verlaufende Stahlmantel 7 einen am Außenumfang im Wesentlichen gleichebenig mit der unteren Betonsäule 4 verlaufenden Anschlussbereich A definiert und dabei an einer Innenseite 8 des Stahlmantels 7 jeweilige allgemein mit 9 bezeichnete Ankerelemente (Fig. 2) vorgesehen sind. Bei einer gattungsbildenden Ausführung (Fig. 2) des Turmes 1 - gemäß DE 20 2006 009 554 U1 - sind als Ankerelemente jeweilige Stege bzw. kammartige Ansätze 10 vorgesehen, die zusätzlich und mit einem Abstand N zur - mit Strichlinien angedeuteten - Bewehrung 11 vorgesehen sind. Durch diesen Abstand N zwischen den Ansätzen 10 und der "eingegossenen" Bewehrung 11 ist die Kraftübertragung weitgehend unbestimmt.

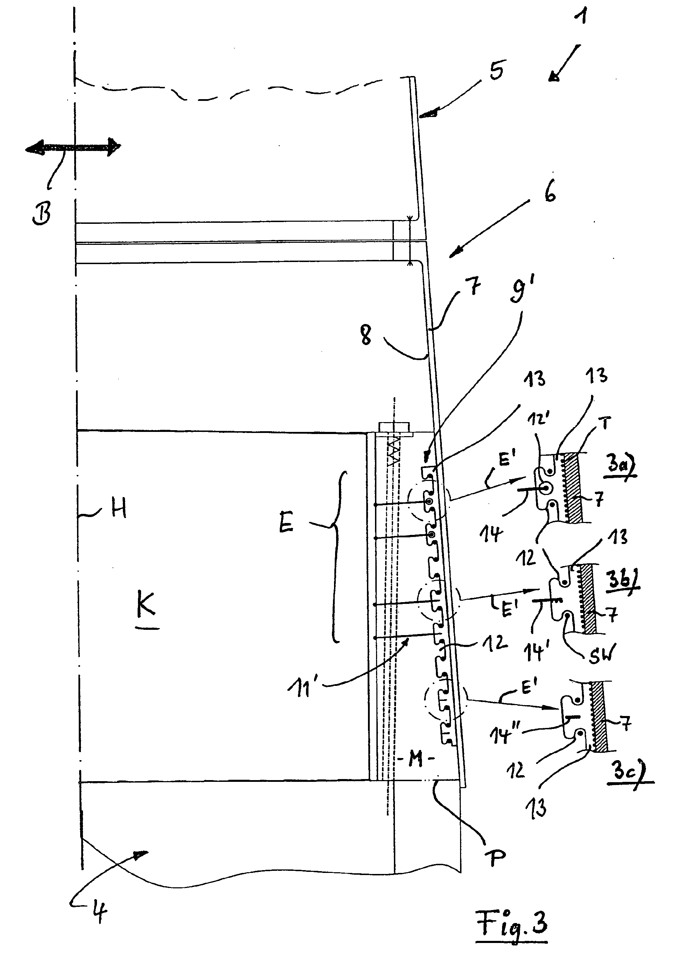

Das erfindungsgemäße Konzept sieht vor, dass in Verbesserung dieses Standes der Technik (Fig. 2) nunmehr als Ankerelemente 9' jeweilige den Stahlmantel 7 im Bereich der Innenseite 8 erfassende Halteeinheiten E vorgesehen sind (Fig. 3). Damit wird das den Kopf der Betonsäule 4 - bis in den Bereich der Betonierfuge P - übergreifende Adaptersegment 6 funktional so verbessert, dass die Bindungsintensität zum Beton in diesem hoch belasteten Bereich des Turmes 1 verbessert, ein Ovalisieren des Stahlmantels 7 verhindert und damit die Langzeitstabilität des Turmes 1 erhöht werden kann. Die Belastung B kann dabei insgesamt aus Eigengewicht, Rotorkräften und Windlasten resultieren, wobei je nach Anwendungsfall des Systems auch Temperaturwechsel, Eis, Erdbeben o. dgl. Umwelteinflüsse beachtlich sein können.

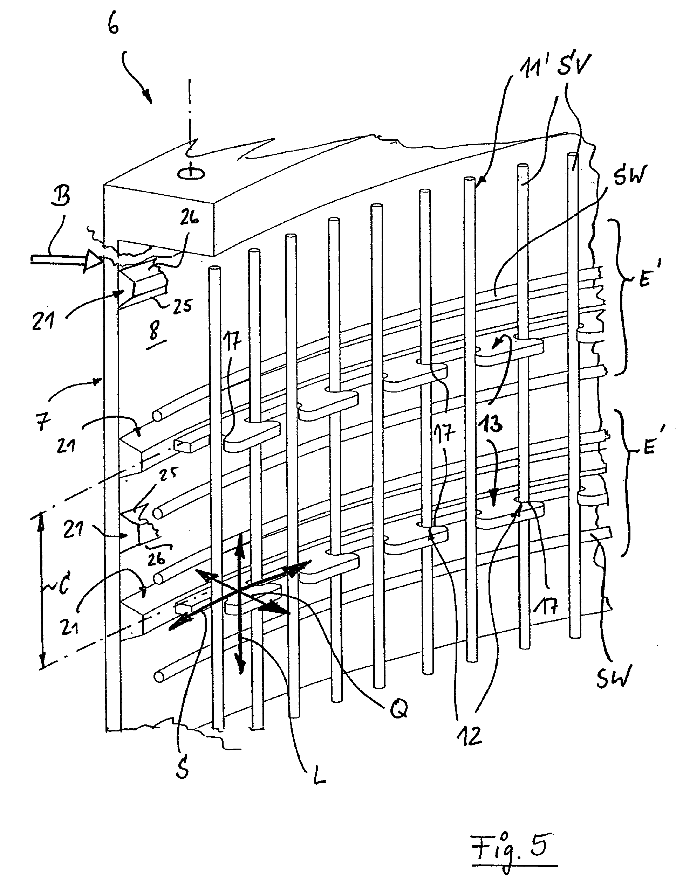

Die als komplexe Struktur am erfindungsgemäßen Turm 1 zusammenwirkenden Halteeinheiten E sind dabei so angeordnet, dass im Verbindungsbereich von Betonsäule 4 und Oberkonstruktion 5 auftretende bzw. resultierende Belastungen B als jeweils aufteilbare Längs-, Quer- und Scherkomponenten L, Q, S gezielt vom Adaptersegment 6 in den Betonaufbau ableitbar sind (Fig. 5). Unter Wirkung von Belastungen B wird der Stahlmantel 7 weder ovalisiert noch vom Beton K abgelöst.

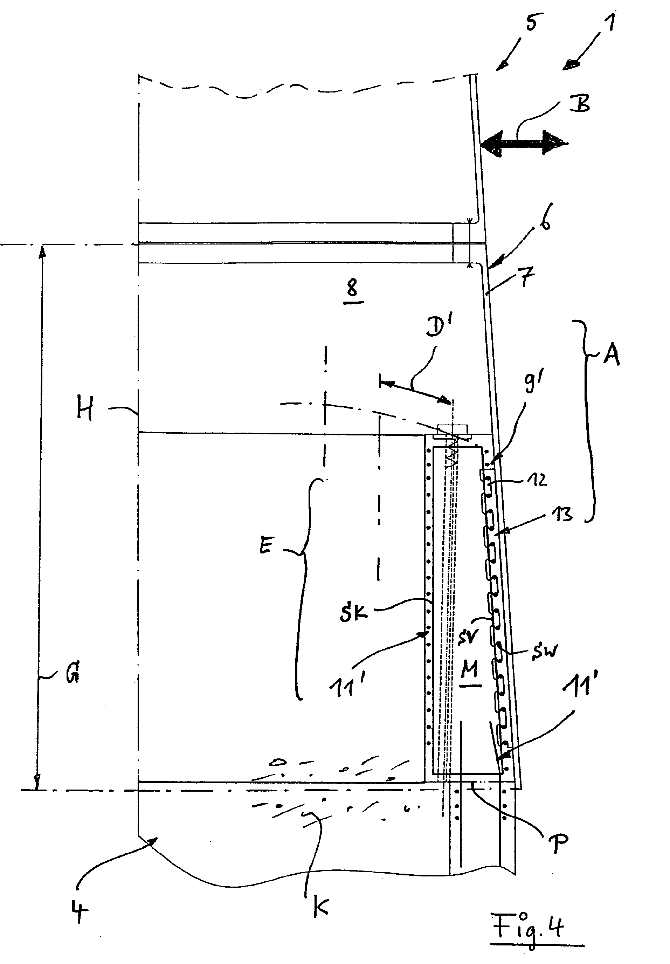

Mit der erfindungsgemäßen Anordnung mehrerer der Halteeinheiten E wird erreicht, dass eine Drei-Komponenten-Verbindung am Stahlmantel 7 wirksam wird. Dabei ist nunmehr zusätzlich ein - bisher nicht vorhandenes - Zugelement in die kombinierte Krafteinleitung integriert, so dass nachteilige Ausbauchungen des Stahlmantels 7 langzeitstabil verhindert werden. Es versteht sich, dass an der Innenseite 8 des im Wesentlichen konzentrisch zur Hochachse H verlaufenden Stahlmantels 7 mehrere der Halteeinheiten E als eine senkrecht, waagerecht und/oder schräg angeordnete Ankerstruktur angeordnet werden können. In den Ausführungsformen gemäß Fig. 3 und Fig. 4 ist jeweils eine senkrechte Anordnung der Halteeinheit E gezeigt, und in der Darstellung gemäß Fig. 5 wird eine waagerechte bzw. horizontale Ausrichtung der die Anlagestruktur bildenden Halteeinheiten E deutlich. Eine konstruktive Variante kann sich dadurch ergeben, dass die Halteeinheiten E an der Innenseite 8 des Stahlmantels 7 wendelförmig angeordnet sind (nicht dargestellt).

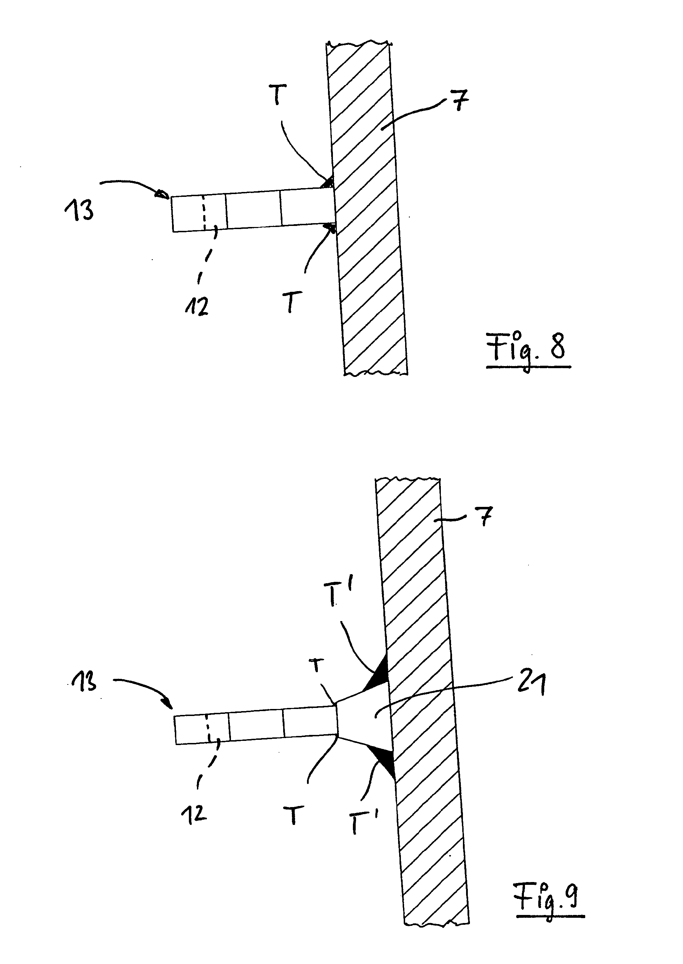

Für eine funktionale Einbindung der jeweiligen Halteeinheiten E in den Anschlussbereich A ist vorgesehen, dass die Halteeinheiten E mit jeweiligen einerseits im Bereich einer ihrer Umfangsflächen mit dem Stahlmantel 7 verbindbaren und andererseits zumindest eine Halteöffnung 12 aufweisenden Profilplatten 13 versehen sind (Fig. 3, Fig. 8 und 9).

Die konstruktive Gestaltung der Profilplatten 13 sieht vor, dass diese in der Einbaulage (Fig. 5) in unterschiedlichen Ausrichtungen fixierbar sind. Im Zusammenwirken mit dem Kopf der Betonsäule 4 wird erreicht, dass die jeweiligen Halteöffnungen 12 zumindest jeweilige am Stahlmantel 7 auftretende Querkräfte Q aufnehmen können und diese Querkräfte Q in die die Bewehrung 11' aufweisenden Betonstrukturen einleitbar sind. Aus Fig. 5 wird deutlich, dass dazu die Profilplatten 13 vorzugsweise in gleichmäßigem Abstand C über den Innenumfang 8 des Adaptersegmentes 6 bzw. des Stahlmantels 7 verteilt sind. Mit dieser "Ringkonstruktion" ist die optimale Ableitung von Längs-, Quer- und Scherkräften L, Q, S auch dann möglich, wenn die Belastung B aus variierenden Richtungen wirkt.

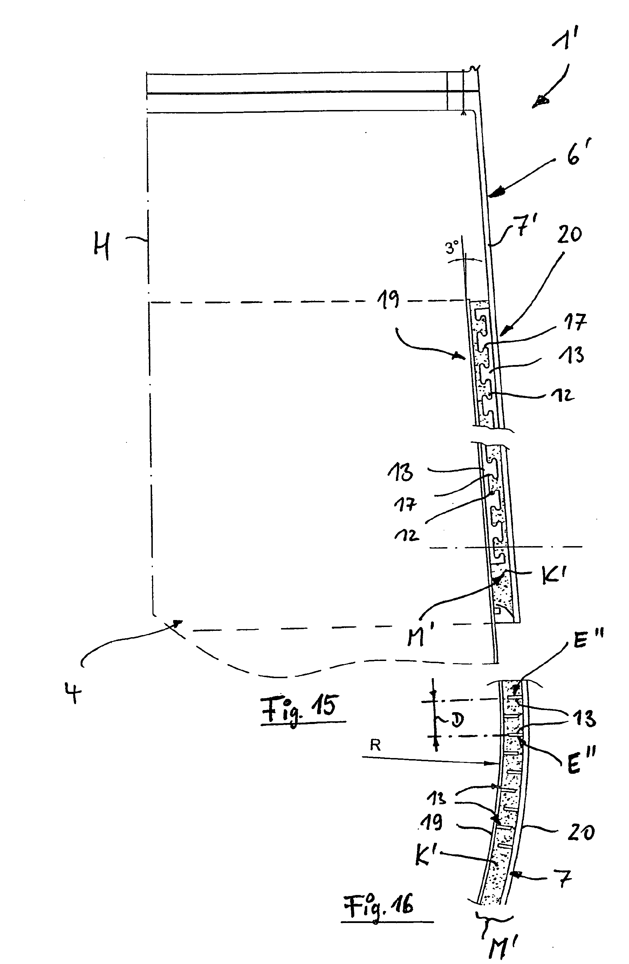

In den Darstellungen gemäß Fig. 3, 4 sowie Fig. 16 wird deutlich, dass die Profilplatten 13 vorzugsweise eine im Wesentlichen parallel zur vertikalen Hochachse H des Turmes 1 ausgerichtete und dabei einen radialen Abstand D, D' (Fig. 16) definierende Einbaulage aufweisen.

Das Konzept der mit Profilplatten 13 versehenen Halteeinheiten E sieht vor, dass die Profilplatten 13 im Bereich ihrer zumindest einen Halteöffnung 12 besonders einfach mit jeweiligen Bewehrungsteilen 11' und/oder Teilen der Betonfüllung K (Fig. 4) verbindbar sind. Dabei ist denkbar, dass die Bewehrungsteile 11' nach der Montage des bereits mit den Profilplatten 13 versehenen Adaptersegmentes 6 in die jeweiligen Halteöffnungen 12 eingeführt werden oder dieser Verbindungsvorgang nach Art einer "Steckverbindung" während einer Montagephase durchgeführt werden kann (Fig. 5). Aus der Prinzipdarstellung in Fig. 4 wird deutlich, dass die hier vorgesehene Bewehrung 11' unmittelbar mit der die Profilplatte 13 aufweisenden Halteeinheit E verbunden ist. Dabei können jeweilige vertikale Stangen SV und horizontale Stangen SW optimal in das System integriert sein (Fig. 5). In Fig. 4 ist die zusätzliche "geschlossene" Ausbildung der Bewehrung 11' mit einem konturierten Schenkel SK gezeigt, womit die Bindungsintensität oberhalb der Betonierfuge P weiter verbessert ist.

In konstruktiver Weiterentwicklung des vorbeschriebenen Konzeptes einer Aussteifungskonstruktion mit Halteeinheiten E ist vorgesehen, dass die Profilplatten 13 und zumindest ein zusätzliches Halteelement 14, 14', 14" (Fig. 3a bis 3c) eine zweiteilige Halteeinheit E' definieren. Dabei ist vorgesehen, dass dieses zusätzliche Halteelement 14, 14', 14" eine in den Beton einlegbare und/oder an der Bewehrung 11 festlegbare Kontur aufweist. In Fig. 3a ist das Halteelement 14 in Form eines in eine Halteöffnung 12' eingreifenden Bewehrungsteils vorgesehen, Fig. 3b zeigt ein durch Schweißen an der Profilplatte 13 gehaltenes Zusatzteil 14', und in Fig. 3c ist das Halteelement 14" in Form einer seitlichen Rippe so ausgeführt, dass jeweilige Schubkräfte aufnehmbar sind.

In jedem vorbeschriebenen Anwendungsfall ist vorgesehen, dass die Profilplatten 13 bzw. die damit definierten Halteeinheiten E, E' mittels einer jeweiligen Schweißverbindung T, T' am Stahlmantel 7 fixiert sind. Die Ausbildung dieser am Innenumfang 8 "streifenförmigen" Profilplatten 13 (Fig. 4, Abstand D') ermöglicht dabei eine Festlegung im Bereich von Kehlnähten, so dass die Vormontage des Adaptersegmentes 6 mit den in den Stahlmantel 7 eingeschweißten Profilplatten 13 vergleichsweise einfach möglich ist, so dass aufwändige Schweißkonturen und Nacharbeiten "vor Ort" vermieden werden.

Weitere technologische Vorteile bei der Bereitstellung der Profilplatten 13 ergeben sich dadurch, dass diese einschließlich deren Halteöffnungen 12, 12' mittels eines Schneidvorgangs aus einem band- oder plattenförmigen Halbzeug hergestellt werden können. Denkbar ist dabei, dass die als entsprechend der Länge G des Adaptersegmentes 6 zugeschnittene Abschnitt-Halbzeuge bereitgestellten Profilplatten 13 durch Stanzen so geformt werden, dass die für den vorbeschriebenen Verbindungsaufbau nutzbaren Konturen in einem Herstellungsschritt erzeugbar sind.

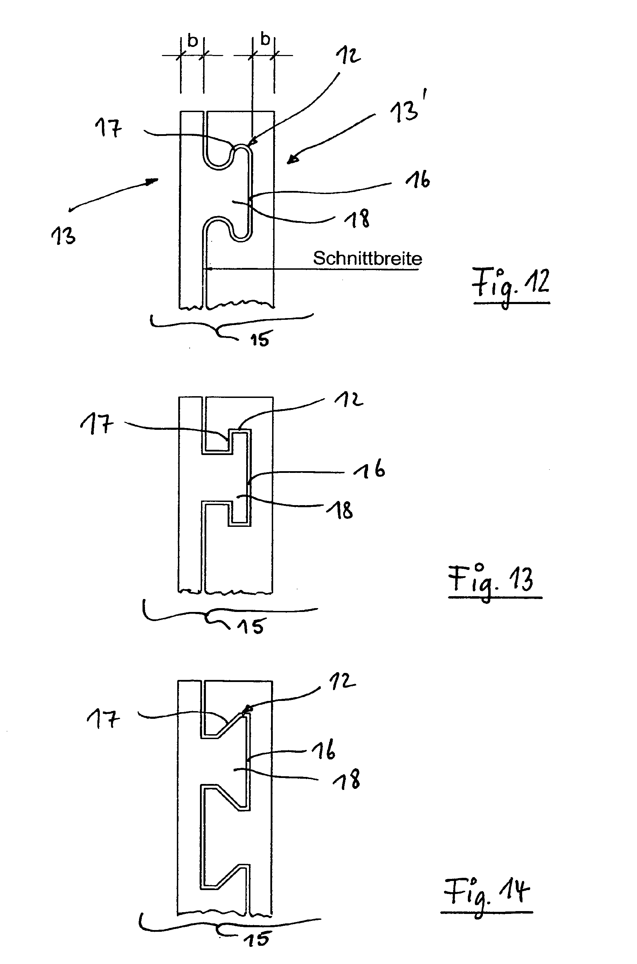

Eine besonders effiziente Ausführung bei der Herstellung der Profilplatten 13 ist in den Darstellungen gemäß Fig. 12 bis Fig. 14 gezeigt, wobei deutlich wird, dass ausgehend von einem Bandmaterial 15 die jeweiligen Profilplatten 13, 13' durch einen durch Laserschneiden erzeugten Schlitz 16 getrennt werden. Damit erfolgt ausgehend von einer Basisbreite b eine Profilierung derart, dass mit einem Laserschneid-Vorgang beide Profilplatten 13, 13' in spiegelbildlicher Ausführung erzeugt werden. Die in Fig. 12 bis Fig. 14 gezeigten Ausführungen verdeutlichen auch, dass als effizient einsetzbare Halteöffnungen 12 jeweilige mit einer Hinterschneidung 17 geformte Profilzähne 18 denkbar sind. Im Zusammenhang mit den jeweiligen Einbaulagen der Profilplatte 13 (gemäß Fig. 3 bis Fig. 5) wird deutlich, dass diese Hinterschneidungen 17 effizient zur Aufnahme der Bewehrung 11' einsetzbar sind.

Diese Hinterschneidungen 17 bilden insgesamt eine wellenförmige Kontur von Profilzähnen, wobei deutlich wird, dass die einseitig offenen Halteöffnungen 12 in Form der Hinterschneidungen 17 nach Art eines Widerlagers die jeweilige Bewehrung 11' aufnehmen können (Fig. 5). Nicht näher dargestellt ist die Herstellung der "lochförmigen" Halteöffnung 12' (Fig. 3a).

In der Einbaulage der Halteeinheiten E, E' bzw. der mit dem Stahlmantel 7 verschweißten Profilplatten 13 ist vorgesehen, dass diese mit ihrer die Halteöffnung 12, 12' aufweisenden Längsseite frei in einen den Beton aufnehmenden Montageraum M hineinragen können (Fig. 3, Fig. 4).

Ausgehend davon ist in einer zweiten Ausführungsform des Turmes 1' gemäß Fig. 15 und Fig. 16 dargestellt, dass ein Montageraum M' im Verbindungsbereich von zwei übereinander gesteckten Stahlrohren 19, 20 vorgesehen ist und hier die erfindungsgemäßen Halteeinheiten E" verlaufen. Diese "gesteckten" und insbesondere einen konischen Verbindungsbereich bildenden Rohre 19, 20 können durch Vergießen des Montageraumes M' mit flüssigem Beton K' in ihrer endgültigen Verbindungslage fixiert werden. Auch in dieser Ausführung des Verbund-Systems können die vergleichsweise "schmalen" Profilplatten 13 eine jeweilige Drei-Komponenten-Halterung realisieren.

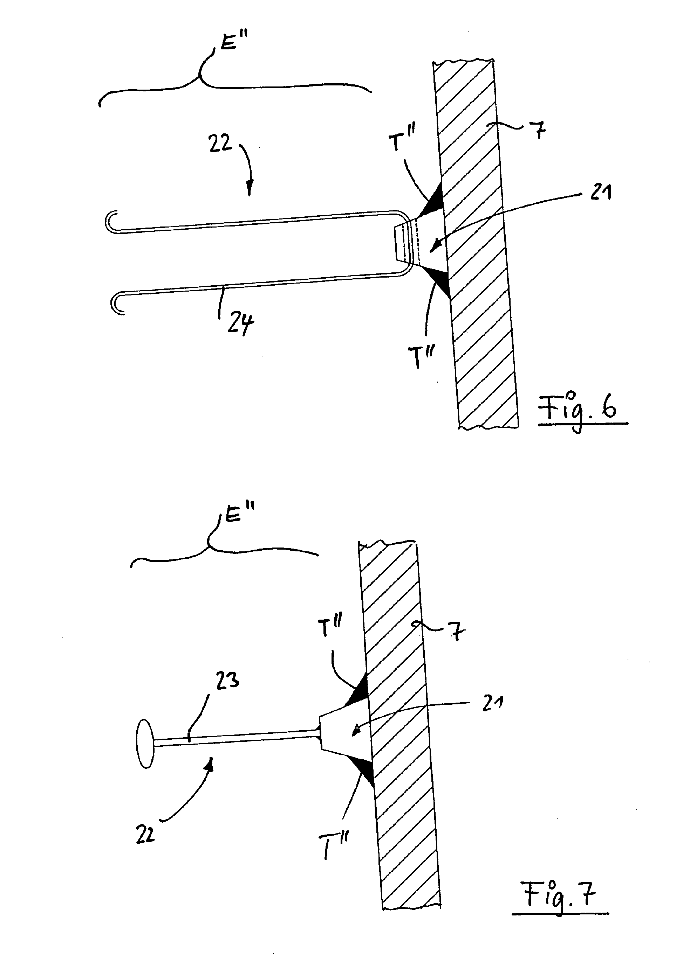

Dabei nehmen die mit Beton K' gefüllten Halteöffnungen 12 bzw. die jeweiligen Hinterschneidungen 17 die Längs- und Querkräfte auf, und die Scherkraftkomponente ist auf das jeweils innen liegende Stahlrohr 19 der Betonsäule 4 ableitbar. Dieses innere Stahlrohr 19 des Kopfes der Betonsäule 4 ist seinerseits mit jeweiligen Profilplatten 13 versehen, so dass im Querschnitt (Fig. 16) eine "meanderförmige" BetonStruktur über den Radius R des Verbindungsbereiches deutlich wird. In dieser Beton-Struktur K' weist jede der Profilplatten 13 - entsprechend ihrer Breite - im Bereich der Hinterschneidungen auch eine "verhakende" Wirkung auf. Dabei können zusätzliche Bewehrungsteile (nicht dargestellt) im Montageraum M' entbehrlich sein. In Fig. 6 und Fig. 7 ist eine weitere Gestaltung der Halteeinheit E" dargestellt, wobei diese (ähnlich Fig. 5) eine am Stahlmantel 7 gehaltene Aufnahmeleiste 21 aufweist. An dieser ist vorteilhaft ein zumindest die Zugbelastungen in Querrichtung Q in die innen liegende Betonstruktur K bzw. die Bewehrung 11' ableitendes Fixierbauteil 22 vorgesehen. In der Darstellung gemäß Fig. 6 ist das Fixierbauteil 22 formschlüssig mit der Aufnahmeleiste 21 verbunden. Die Aufnahmeleiste 21 ihrerseits ist durch Schweißverbindungen T" am Stahlmantel 7 fixiert.

In Fig. 7 ist eine zweite Ausführung des Fixierbauteils 22 dargestellt, wobei dieses ebenfalls mittels Schweißverbindungen T" an der Aufnahmeleiste 21 gehalten ist. Dieses Fixierbauteil 22 ist dabei als ein an sich bekannter Kopfbolzen 23 ausgeführt. In der Ausführung gemäß Fig. 6 ist das Fixierbauteil 22 als Hängebügel 24 vorgesehen. In Zusammenschau mit Fig. 5 wird deutlich, dass auf der Aufnahmeleiste 21 als Fixierbauteil die auch in Einzelstellung (Fig. 3, Fig. 4) nutzbare Profilplatte 13 vorgesehen ist.

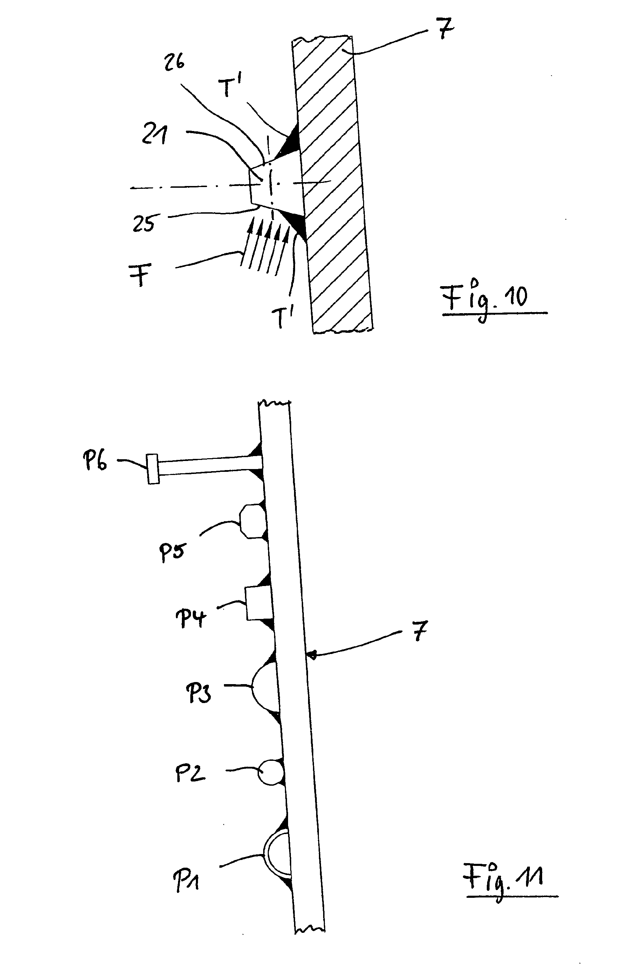

In Fig. 10 und Fig. 11 sind weitere Ausführungsformen von jeweiligen in der Einbaulage in Kraftrichtung F belastbaren Aufnahmeleiste 21 dargestellt. Die Fig. 11 zeigt beispielhaft - an nur einem Abschnitt des Stahlmantels 7 - jeweilige Aufnahmeleisten unterschiedlicher Querschnittskontur, wobei diese als rohrförmige P1, kreisförmige P2, halbkreisförmige P3, rechteckige P4, vieleckige P5 und T-förmige P6 Konturen dargestellt sind.

Die Ausführung der Aufnahmeleiste 21 gemäß Fig. 10 zeigt deren vorteilhafte trapezförmige Gestaltung mit "schrägen" Schenkeln 25, 26. Diese Gestaltung bewirkt, dass neben der optimalen Krafteinleitung (Pfeil F) in der Montagephase beim Eingießen von Beton die in dieser Betonfüllung enthaltenen Luftanteile abgeleitet werden und damit Hohlräume in der Struktur sicher vermieden sind. In Fig. 5 ist die zusätzliche Anordnung von Aufnahmeleisten 21 als jeweilige Einzelteile im Bereich der Halteeinheiten E' dargestellt, so dass damit deren zusätzliche Stabilisierungsfunktion deutlich wird.

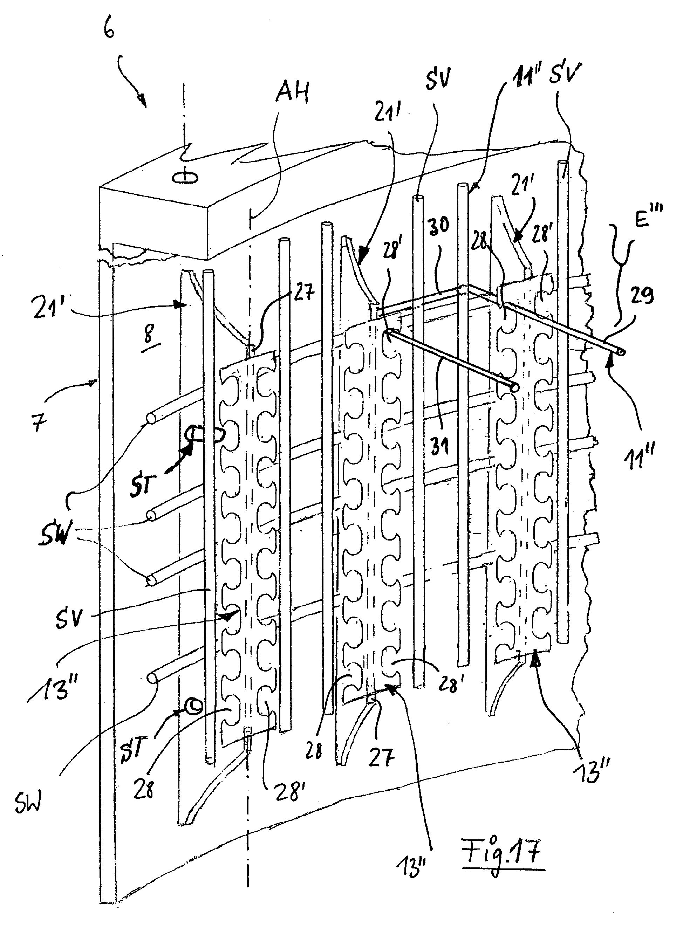

Ausgehend von Fig. 4 und Fig. 5 ist eine weitere Kombination von Aufnahmeleisten 21' und jeweiligen Profilplatten 13" in den Darstellungen gemäß Fig. 17 bis Fig. 21 gezeigt. Bei dieser Ausführung sind jeweilige vertikal verlaufende (Hochachse AH) Aufnahmeleisten 21' einerseits am Stahlmantel 7 des Adaptersegmentes 6 gehalten, und im Bereich einer Stirnfläche 27 sind jeweilige "doppelte" Halteöffnungen 28, 28' aufweisende Profilplatten 13" vorgesehen.

Mit dieser Ausführung der Profilplatte 13" mit "doppelten" Halteöffnungen 28, 28' sind - ausgehend von der waagerechten Variante gemäß Fig. 5, die ebenfalls die Profilplatten 13" aufweisen kann (nicht dargestellt) - weitere Kombinationen der Bewehrung 11, 11' in den jeweiligen Halteeinheiten E"' (Fig. 17) denkbar. Dabei ist eine Bewehrung 11" veranschaulicht, die mit einer die Bewehrungsteile 11' erfassenden Biegekontur versehen ist. Dabei werden gleichzeitig mit den Schenkeln 29, 30, 31 die beiden benachbarten Profilplatten 13" erfasst, so dass damit die bereits in Fig. 5 gezeigte Kraftabteilung (hier: Pfeile L, Q, S) bei der Halteeinheit E'" weiter verbessert ist.

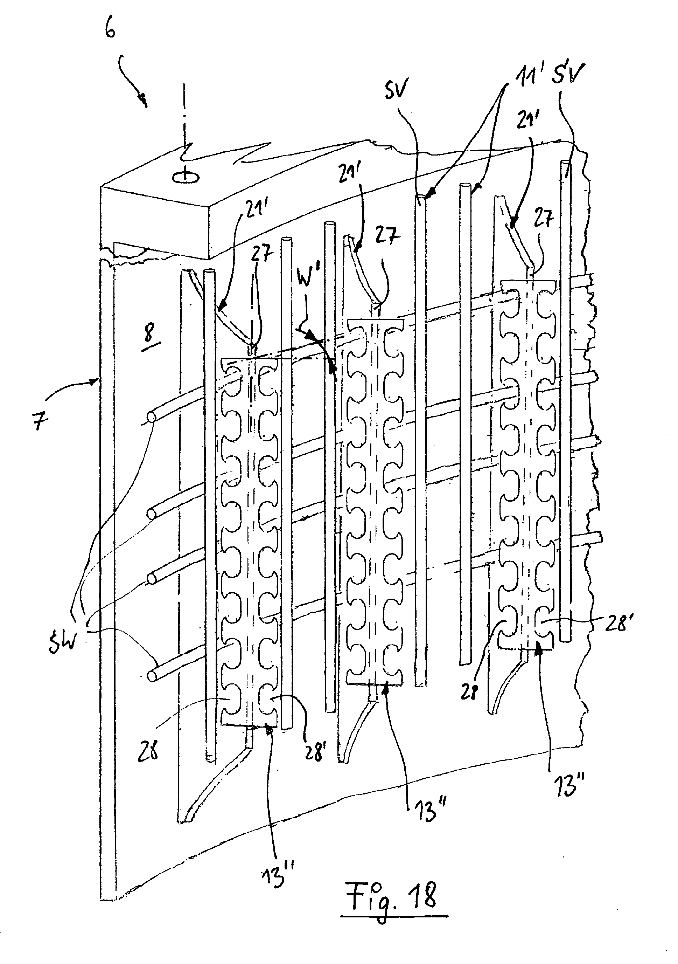

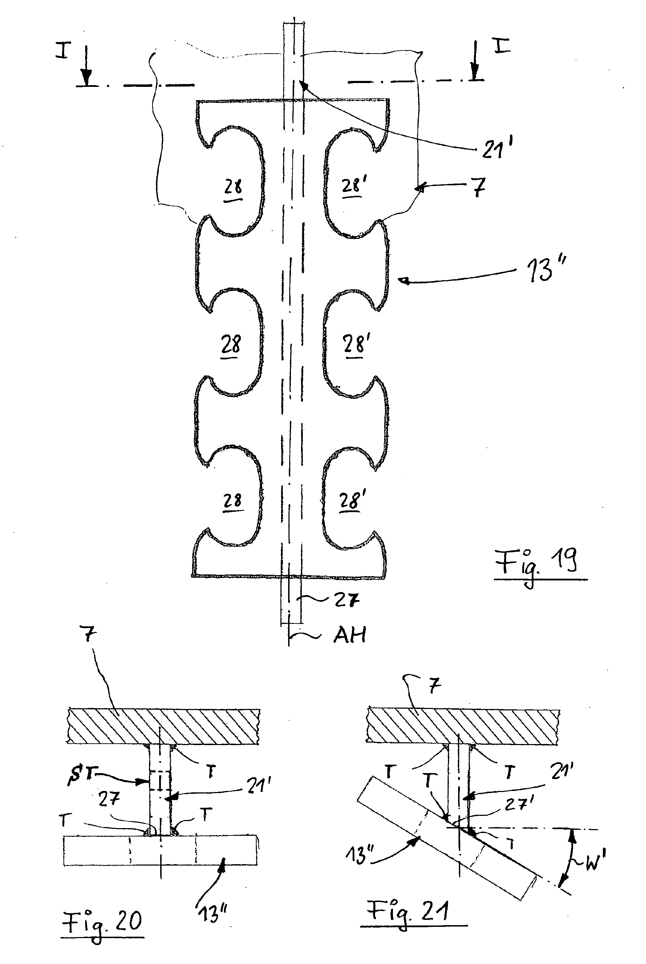

In Fig. 18 ist eine weitere Variante der im Wesentlichen spiegelbildliche Halteöffnungen 28, 28' aufweisenden Profilplatte 13" gezeigt, wobei diese mit einer Schrägstellung (Winkel W') eine zum Stahlmantel 7 hin spitzwinklig geneigte Verbindungslage aufweisen. In der Gegenüberstellung von Fig. 20 und Fig. 21 wird die jeweilige variierende Einbaulage der Profilplatte 13" in einer Schnittdarstellung gezeigt.

Die in Fig. 19 vergrößert dargestellte Profilplatte 13" kann im Bereich der Halteöffnungen 28, 28' auch mit variierenden Konturen (ähnlich Fig. 12 bis Fig. 14) versehen sein. Ebenso ist denkbar, in den vertikal verlaufenden Aufnahmeleisten 21' jeweilige Stecköffnungen ST (Fig. 17) vorzusehen, so dass in diesem Bereich zusätzliche Knotenpunkte mittels der Bewehrungsteile (hier nicht dargestellt) ausführbar sind. Diese Stecköffnungen ST können dabei als Bohrungen oder Langlöcher ausgeführt sein.

## Patentansprüche

1. Turm für eine Windenergieanlage (2), wobei dieser (1) mit einer bodenseitig abgestützten Betonsäule (4), einer vorzugsweise rohrförmigen Oberkonstruktion (5) und einem zwischen liegenden Adaptersegment (6) mit ringförmigem Stahlmantel (7) als ein hybrider Turmaufbau ausgeführt ist, derart, dass der konzentrisch zu einer vertikalen Hochachse (H) verlaufende Stahlmantel (7) einen am Außenumfang im Wesentlichen gleichebenig mit der unteren Betonsäule (4) verlaufenden Anschlussbereich (A) definiert und dabei an einer Innenseite (8) des Stahlmantels (7) jeweilige Ankerelemente (9) vorgesehen sind, **dadurch gekennzeichnet, dass** als Ankerelemente (9') jeweilige zumindest den Stahlmantel (7) erfassende Halteeinheiten (E, E', E") vorgesehen sind, mit denen im Verbindungsbereich von Betonsäule (4) und Oberkonstruktion (5) aufnehmbare Belastungen (B) als jeweils aufteilbare Längs-, Quer- und Scherkomponenten (L, Q, S) gezielt vom Adaptersegment (6, 6') in den Betonaufbau (K, K') ableitbar sind.

2. Turm nach Anspruch 1, **dadurch gekennzeichnet, dass** an der Innenseite (8) des im Wesentlichen konzentrisch zur Hochachse (H) verlaufenden Stahlmantels (7, 7') mehrere der Halteeinheiten (E, E', E") eine senkrecht, waagerecht und/oder schräg angeordnete Ankerstruktur bilden.

3. Turm nach Anspruch 1 oder 2, **dadurch gekennzeichnet, dass** die Halteeinheiten (E, E', E") wendelförmig an der Innenseite (8) des Stahlmantels (7) verlaufen.

4. Turm nach einem der Ansprüche 1 bis 3, **dadurch gekennzeichnet, dass** die Halteeinheiten (E, E', E") mit jeweiligen im Bereich einer ihrer Umfangsflächen mit dem Stahlmantel (7) verbindbaren und zumindest eine Halteöffnung (12, 12') aufweisenden Profilplatten (13, 13') versehen sind.

5. Turm nach Anspruch 4, **dadurch gekennzeichnet, dass** in der Einbaulage der Profilplatten (13, 13') deren Halteöffnungen (12) eine Ausrichtung aufweisen, mittels der zumindest jeweilige am Stahlmantel (7) auftretende Längs-, Quer- und Scherkräfte (L, Q, S) aufnehmbar und in die Betonstruktur (K) einleitbar sind.

6. Turm nach Anspruch 4 oder 5, **dadurch gekennzeichnet, dass** die Profilplatten (13, 13') vorzugsweise in gleichmäßigem Abstand (D, D', C) über den Innenumfang des Adaptersegmentes (6) bzw. des Stahlmantels (7) verteilt sind.

7. Turm nach einem der Ansprüche 4 bis 6, **dadurch gekennzeichnet, dass** die Profilplatten (13, 13') eine im Wesentlichen parallel zur vertikalen Hochachse (H) des Turmes (1) ausgerichtete und einen radialen Abstand (D, D') definierende Einbaulage aufweisen.

8. Turm nach einem der Ansprüche 4 bis 7, **dadurch gekennzeichnet, dass** die Profilplatten (13, 13') im Bereich der zumindest einen Halteöffnung (12) mit jeweiligen Bewehrungsteilen (11') und/oder Teilen der Betonfüllung (K, K') verbindbar sind.

9. Turm nach einem der Ansprüche 4 bis 8, **dadurch gekennzeichnet, dass** die Halteeinheit (E, E', E") aus Profilplatten (13, 13') und zumindest einem zusätzlichen Halteelement (14, 14', 14", 22) gebildet ist und dieses eine in den Beton (K, K') einlegbare und/oder an der Bewehrung (11') festlegbare Kontur aufweist.

10. Turm nach einem der Ansprüche 4 bis 9, **dadurch gekennzeichnet, dass** die Profilplatten (13, 13') bzw. die Halteeinheiten (E, E', E") mittels einer Schweißverbindung (T, T', T") am Stahlmantel (7) fixierbar sind.

11. Turm nach einem der Ansprüche 4 bis 10, **dadurch gekennzeichnet, dass** die Profilplatten (13, 13') und deren Halteöffnungen (12, 12') mittels eines Schneidvorgangs aus einem band- oder plattenförmigen Halbzeug (15) herstellbar sind.

12. Turm nach Anspruch 11, **dadurch gekennzeichnet, dass** die Profilplatten (13, 13') durch Stanzen geformt sind.

13. Turm nach Anspruch 11, **dadurch gekennzeichnet, dass** die Profilplatten (13, 13') durch Laserschneiden profiliert sind.

14. Turm nach einem der Ansprüche 4 bis 13, **dadurch gekennzeichnet, dass** die Halteöffnungen (12, 12') nach Art eines Widerlagers wirksam sind.

15. Turm nach einem der Ansprüche 4 bis 14, **dadurch gekennzeichnet, dass** die Halteöffnungen (12) jeweils in Form von an einer der Längsseiten der Profilplatten (13, 13') geformten Profilzähnen (18) mit Hinterschneidungen (17) vorgesehen sind.

16. Turm nach einem der Ansprüche 4 bis 15, **dadurch gekennzeichnet, dass** mehrere der mit Hinterschneidungen (17) geformten Profilzähne (18) eine wellenförmige Kontur an der Profilplatte (13, 13') bilden.

17. Turm nach einem der Ansprüche 1 bis 16, **dadurch gekennzeichnet, dass** die Halteeinheit (E, E', E") bzw. die mit dem Stahlmantel (7) verschweißten Profilplatten (13, 13') mit ihrer die Halteöffnung (12, 12') aufweisenden Längsseite frei in einen den Beton (K, K') aufnehmenden Montageraum (M, M') ragen.

18. Turm nach Anspruch 17, **dadurch gekennzeichnet, dass** der Montageraum (M, M') im Verbindungsbereich von zwei übereinander gesteckten Stahlrohren (19, 20) vorgesehen ist und diese durch Vergießen des Montageraumes (M') mit Beton (K') verbindbar sind.

19. Turm nach einem der Ansprüche 1 bis 18, **dadurch gekennzeichnet, dass** die Halteeinheit (E, E', E") mit einer am Stahlmantel (7) gehaltenen Aufnahmeleiste (21) zusammenwirkt.

20. Turm nach Anspruch 19, **dadurch gekennzeichnet, dass** an der Aufnahmeleiste (21) ein zumindest die Zugbelastungen (Q) in die innen liegende Betonstruktur (K) ableitendes Fixierbauteil (22) vorgesehen ist.

21. Turm nach Anspruch 20, **dadurch gekennzeichnet, dass** das Fixierbauteil (22) formschlüssig mit der Aufnahmeleiste (21) verbunden ist.

22. Turm nach Anspruch 20, **dadurch gekennzeichnet, dass** das Fixierbauteil (22) mittels einer Schweißverbindung (T") an der Aufnahmeleiste (21) gehalten ist.

23. Turm nach einem der Ansprüche 20 bis 22, **dadurch gekennzeichnet, dass** als Fixierbauteil (22) ein Kopfbolzen (23) vorgesehen ist.

24. Turm nach einem der Ansprüche 20 bis 22, **dadurch gekennzeichnet, dass** als Fixierbauteil (22) ein Hängebügel (24)vorgesehen ist.

25. Turm nach einem der Ansprüche 20 bis 22, **dadurch gekennzeichnet, dass** als Fixierbauteil (22) die Profilplatte (13, 13') vorgesehen ist.
